(19) Europäisches Patentamt
European Patent Office
Office européen des brevets

(11) EP 0 692 830 A1

(12) **EUROPEAN PATENT APPLICATION**

(43) Date of publication:
17.01.1996 Bulletin 1996/03

(51) Int. Cl.⁶: **H01M 2/16**

(21) Application number: 95111008.9

(22) Date of filing: 13.07.1995

(84) Designated Contracting States:
**DE FR GB**

(30) Priority: **14.07.1994 JP 185357/94**

(71) Applicant: **NIPPON MUKI CO., LTD.**
**Tokyo, 101 (JP)**

(72) Inventors:
• **Endoh, Hideo,**
**c/o Nippon Muki Co., Ltd.**
**Fuwa-Gun, Gifu Prefecture, 503-21 (JP)**

• **Kawachi, Masahiro,**
**c/o Nippon Muki Co., Ltd.**
**Fuwa-Gun, Gifu Prefecture, 503-21 (JP)**
• **Hibi, Fumihide,**
**c/o Nippon Muki Co., Ltd.**
**Tokyo, 101 (JP)**

(74) Representative: **Schmidt-Evers, Jürgen, Dipl.-Ing.**
**et al**
**D-80331 München (DE)**

(54) **Method for preparing inorganic material-coated separator for storage batteries**

(57) A method for preparing an inorganic material-coated separator for storage batteries comprises the steps of extruding a sheet 6 of a thermoplastic synthetic resin including a polyolefinic resin as a principal component, inorganic powder and a pore-forming agent, using an extruder 1; adhering, to one side of the thermoplastic sheet 6, an inorganic sheet 4 mainly including an inorganic material to which a polyolefinic synthetic pulp, as an organic binder, is added in an amount ranging from 10 to 40% by weight on the basis of the total weight of the inorganic sheet 4 while the thermoplastic sheet 6 is still in the semi-molten state to give a laminate; then pressure-molding the laminate to unify the semi-molten sheet 6 with the inorganic sheet 4; and then cooling the unified laminate 7 to give the inorganic material-coated separator 7' and removing the pore-forming agent therefrom.

**FIG.1**

EP 0 692 830 A1

**Description**

BACKGROUND OF THE INVENTION

The present invention relates to a method for preparing an inorganic material-coated separator for use in storage batteries.

There has been known a leaf-like or bag-like separator of a thermoplastic resin for use in lead acid storage batteries, but the separator suffers from various problems. For instance, the separator is deteriorated through oxidation by the action of nascent oxygen generated on a positive plate and the oxidizing power of lead dioxide as a positive electrode-active material during operating a lead acid storage battery which is equipped with the separator, suffers damages such as formation of holes and as a result, the service life of the lead acid storage battery is considerably reduced. To eliminate the foregoing drawbacks, there has been used a separator provided with a plate-like glass mat prepared by adhering a nonwoven fabric of glass fibers, i.e., a glass mat to the face of the separator which is arranged so as to be opposed to the positive plate of a storage battery.

In Japanese Patent Publication No. Sho 60-3740, there has been proposed a method for preparing a separator for storage batteries which comprises pressing an extrusion moulded polyolefin resin sheet, while the resin sheet is still in the molten state, to a glass mat to form an integration, and then extracting at least one component in the sheet by solvent.

In case of roll-like separator to be formed into bags, there has been proposed, for instance, a method for preparing an inorganic material-coated separator which comprises extruding, into a sheet-like product, a molten and kneaded mixture of an acid-resistant, oxidation-resistant polyolefinic resin, inorganic powder and a pore-forming agent, wherein an inorganic material is adhered to at least one side of the sheet in the semi-molten state, the assembly is simultaneously pressed to unify the same and then the pore-forming agent is removed (see Japanese Un-Examined Patent Publication No. Hei 4-294055).

However, the foregoing methods for preparing the separator coated with an inorganic material lack a measure to solve problems encountered when separators are formed into a product having a bag-like shape. More specifically, if a large amount of an inorganic material is applied onto at least one side of a separator and the separator is formed into bag-like products while the inorganic material-coated face thereof is on the inside, the inorganic material considerably impairs the ability of the separator to be formed into bags and the portions fused for the formation of such bags are peeled off. For this reason, there has been desired the development of an improved inorganic material-coated separator for lead acid storage batteries which permits the solution of the foregoing problems and which is excellent in the ability to be formed into bags.

SUMMARY OF THE INVENTION

Accordingly, an object of the present invention is to provide a method for preparing a roll-like separator coated with an inorganic material which satisfies the foregoing requirements and which is excellent in the ability to be formed into bags.

According to the present invention, the foregoing object can effectively be accomplished by providing a method for preparing an inorganic material-coated separator for storage batteries which comprises the steps of extruding a sheet of a thermoplastic synthetic resin using an extruder; adhering, to one side of the thermoplastic sheet, an inorganic sheet mainly including an inorganic material to which polyolefinic synthetic pulp, as an organic binder, is added in an amount ranging from 10 to 40% by weight on the basis of the total weight of the inorganic sheet while the thermoplastic sheet is still in the semi-molten state to give a laminate; then pressing the laminate to unify the semi-molten sheet with the inorganic sheet; and then cooling the unified laminate.

BRIEF EXPLANATION OF THE DRAWING

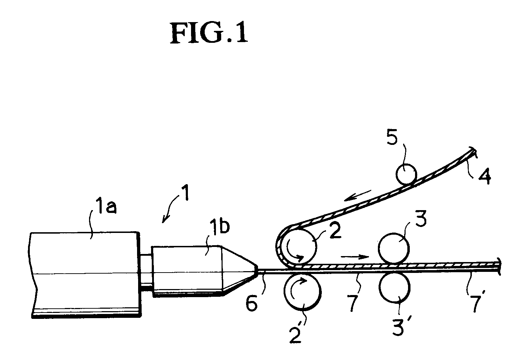

Fig. 1 is a schematic side view showing the principal part of an apparatus for preparing inorganic material-coated separators which is used for practicing an example of the production method of the present invention.

DESCRIPTION OF THE PREFERRED EMBODIMENTS

The sheet of an inorganic material (inorganic sheet) which is adhered to the synthetic resin sheet in the semi-molten state comprises an inorganic material as a principal ingredient and polyolefinic synthetic pulp as an organic binder in an amount ranging from 10 to 40% by weight on the basis of the total weight of the inorganic sheet. Therefore, the inorganic sheet per se may be formed into bags and still remains a sufficient ability to be formed into bags even when it is united with the separator.

The inorganic material used in the inorganic sheet is preferably acid-resistant glass fibers having an average fiber diameter of not more than 5 micrometers. The use of such glass fibers permits the improvement in the degree of compactness of the inorganic sheet and accordingly, the resulting separator exhibits an excellent effect of inhibiting penetration of an electrode active material and an effect of extending the service life of the resulting storage battery even if the thickness of the inorganic sheet is reduced to a level on the order of about 0.3 mm. The inorganic material used in the inorganic sheet may be glass fibers in which inorganic powder such as powder of silica, diatomaceous earth or the like is incorporated.

The average fiber diameter of glass fibers used in the present invention is calculated from the following formula:

$$R = 4 / (Sg \times Ss)$$

wherein R represents the average fiber diameter (micrometer) of glass fibers, Sg represents the specific gravity of glass and Ss represents the specific surface area (m²/g) of glass fibers which is measured according to the BET method.

On the other hand, if the glass fibers herein used have an average fiber diameter of greater than 5 micrometers, for instance, if the semi-molten sheet of a synthetic resin is unified with a glass mat for lead acid storage batteries whose glass fibers have an average fiber diameter of 19 micrometers as specified in JIS C2202, the synthetic resin in the semi-molten state penetrates into interstices of the sheet of the inorganic material, this in turn results in a substantial increase in the real thickness of the resulting separator and the electric resistance of the separator is considerably increased. Incidentally, the flat portion of a separator equipped with an armor rib to be formed into bags, which is incorporated into a lead acid storage battery for motorcars presently put to practical use has a thickness of 0.25 mm and accordingly, the inorganic sheet is completely embedded in the synthetic resin in the semi-molten state if the glass fibers used have an average fiber diameter of more than 5micrometers. For this reason, it is difficult to form a protective layer consisting of the inorganic sheet on the surface of the separator.

The above-mentioned polyolefinic synthetic pulp used in the invention as a binder for forming the inorganic sheet may be, for instance, polyethylene or polypropylene synthetic pulp, but the polyethylene synthetic pulp is preferably used since it has a low melting point and permits the formation of the inorganic sheet at a low temperature. The pulp also serves for the adhesion of the inorganic sheet to the thermoplastic sheet. In addition, the amount of the synthetic pulp to be incorporated into the inorganic sheet ranges from 10 to 40% by weight, and preferably 20 to 40% by weight, on the basis of the total weight of the inorganic sheet. This is because if the amount thereof is less than 10% by weight, the ability of the pulp to form the inorganic sheet or to fuse or adhere the inorganic sheet to the thermoplastic sheet is considerably impaired during forming the resulting separator into bags, while if it exceeds 40% by weight, the electric resistance of the resulting separator is substantially increased.

The thermoplastic synthetic resins used for the preparation of semi-molten sheet in the invention include, for instance, polyolefinic resins such as polyethylene, polypropylene, polybutylene, polymethylpentene, a copolymer thereof such as ethylene-propylene or ethylene-butylene copolymer or the like and a polyblend of two or more of the above polymers and copolymers. Typical examples thereof are polyolefinic resins which are excellent in acid resistance and resistance to oxidation and which have a weight-average molecular weight of not less than $1 \times 10^5$, such as ultra high molecular weight polyethylene having a weight-average molecular weight of about 2,000,000. The thermoplastic synthetic resin is admixed with inorganic powder and a pore-forming agent which also serves as a plasticizer and then kneaded prior to the extrusion thereof into a semi-molten sheet. The inorganic powder includes, for instance, fine powder selected from silica, silicate such as calcium silicate or the like, alumina, titania, kaolin, clay, talc, diatomaceous earth, carbon black, glass fiber powder and the like, which may be used alone or in combination. The pore-forming agent includes, for instance, paraffinic oils, waxes, phthalic esters and the like.

The inorganic material-coated separator prepared according to the foregoing method is formed into a bag- like product through the ultrasonic sealing, fusion-bonding with heating or mechanical bonding techniques and a storage battery is assembled in such a manner that the inorganic sheet-side of the bag-like separator comes in contact with the surface of a positive plate. The resulting storage battery has a service life longer than that of the storage battery in which the conventional separator is incorporated, due to the separator- protective effect of the inorganic sheet. Moreover, the separator of the present invention is excellent in the ability to be formed into a bag-like shape when assembling a storage battery and accordingly, has a high industrial value.

Preferred embodiments of the present invention will hereunder be explained with reference to the accompanying drawing.

Fig. 1 is a schematic side view of an embodiment (principal part) of an apparatus for practicing the method for preparing an inorganic material-coated separator for storage batteries according to the present invention.

In Fig. 1, the reference numeral 1 represents an extruder which comprises an extruder body 1a and a T-shaped die 1b communicated to the fore part of the extruder body 1a. A pair of upper and lower heat-insulating type rollers 2 and 2' for pressure molding are positioned in front of the T-shaped die 1b while holding a predetermined distance away from one another and a pair of upper and lower cooling rolls 3 and 3' are arranged at a position ahead of the pressure molding rollers 2 and 2'. When the inorganic material-coated separator is prepared using the apparatus shown in Fig. 1, an inorganic sheet 4 is prepared, in advance, by the wet paper-making method using a polyolefinic synthetic pulp as a binder and wound on a drum (not shown) in the form of a roll. Then the inorganic sheet 4 is unwound from the roll and fed to the apparatus through a guide roll 5, while a semi-molten resin sheet 6 containing a pore-forming agent is simultaneously extruded through the extruder 1, to adhere and unify the inorganic sheet 4 with the resin sheet 6 and to thus give an inorganic material-coated separator 7 as an intermediate. More specifically, the inorganic sheet 4, which is prepared by the wet paper-making method and fed to the apparatus through the guide roll 5, is put on the upper surface of the semi-molten resin sheet 6 extruded from the extruder 1 to give a laminate and the resulting laminate is passed through the paired pressure-molding rollers 2and 2' to unify them and give a unified sheet 7 and finally the sheet 7 is passed through the paired cooling rolls 3 and 3' to solidify, with cooling, the sheet and to thus give an inorganic material-coated separator 7' prior to the removal of the pore-forming agent. Then the pore-forming agent is removed with an extracting agent from the inorganic material-coated separator 7' followed by drying the sheet to give a final inorganic material-coated separator.

The above-mentioned extracting agent may be, for instance, hydrocarbons such as n-hexane, cyclohexane, benzene, toluene, petroleum ether, gasoline and the like; and halogenated hydrocarbons such as trichloroethylene tetrachloroethylene, carbon tetrachloride, methylene chloride, tetrachloroethylene and the like.

The method of the present invention will hereunder be described in more detail with reference to the following non-limitative working Examples and Comparative Examples. An average fiber diameter of glass fibers used in the following Examples is calculated from the formula :

$$R = 4 / (Sg \times Ss)$$

wherein R, Sg and Ss are as defined above.

Example 1

To a ultra high molecular weight polyethylene having a weight-average molecular weight of about 2,000,000, there were added silica fine powder and a paraffinic oil simultaneously serving as a plasticizer and a pore-forming agent in amounts of 100 parts by weight and 400 parts by weight per 100 parts by weight of the polyethylene, respectively, followed by melting the resulting blend with heating in the extruder body 1a shown in Fig. 1, then extrusion of the molten blend, through the T-shaped die 1b, into a semi-molten resin sheet having a thickness of 0.3 mm and passing the resin sheet through the interstice formed between the paired upper and lower heat-insulating type rollers 2 and 2' for pressure molding arranged in front of the T-shaped die 1b.

On the other hand, a sheet of an inorganic material was prepared by blending 80% by weight of acid-resistant glass fibers having an average fiber diameter of 0.5 micrometers and 20% by weight of polyethylene synthetic pulp and then forming the resulting blend into a sheet mainly comprising the inorganic material, having a thickness of 0.2 mm and wound in a roll according to the usual wet paper-making method. The resulting roll-like inorganic sheet was unwound from the roll followed by feeding the inorganic sheet to the interstice formed between the pressure-molding rollers 2 and 2' through the guide roll 5 and the upper pressure-molding roller 2 to unify it with the foregoing semi-molten resin sheet and to simultaneously mold the semi-molten sheet with formation of ribs on the surface of the semi-molten sheet free of the inorganic sheet.

Then the inorganic material-coated separator 7 prior to the removal of the pore-forming agent was solidified through cooling by passing it through the paired upper and lower cooling rolls 3 and 3' arranged at a position ahead of the pressure molding rollers 2 and 2' to thus give a unified inorganic material-coated separator 7' prior to the removal of the pore-forming agent.

Thereafter, about 97% of the paraffinic oil simultaneously serving as a plasticizer and a pore-forming agent was extracted from the separator 7' by immersing the separator in or passing it through an extraction solvent comprising an organic solvent such as trichloroethylene to thus give an intended inorganic material-coated separator.

The overall thickness of the separator was found to be 0.65 mm, in which the thickness of the coating of the inorganic material was 0.2 mm, the height of the rib was 0.2 mm and thus the degree of compactness of the resulting separator was very high. In other words, the degree of the penetration of the separator material into the uneven portions on the surface of the inorganic sheet was such that the separator material penetrated into the inorganic sheet to a depth corresponding to only about 5% of the thickness of the latter, i.e., there was not observed any substantial penetration of the separator material into the inorganic sheet.

Example 2

The same procedures used in Example 1 were repeated except that a sheet of an inorganic material was prepared by blending 80% by weight of acid-resistant glass fibers having an average fiber diameter of 2 micrometers and 20% by weight of polyethylene synthetic pulp and then forming the resulting blend into a sheet having a thickness of 0.2 mm and wound in a roll according to the usual wet paper-making method, to thus eve a separator. The overall thickness of the separator was found to be 0.65 mm, in which the thickness of the coating of the inorganic material was found to be 0.2 mm and the height of the rib was found to be 0.2 mm.

Example 3

The same procedures used in Example 1 were repeated except that a sheet of an inorganic material was prepared by blending 80% by weight of acid-resistant glass fibers having an average fiber diameter of 5 micrometers and 20% by weight of polyethylene synthetic pulp and then forming the resulting blend into a sheet having a thickness of 0.2 mm and wound in a roll according to the usual wet paper-making method, to thus give a separator. The overall thickness of the separator was found to be 0.63 mm, in which the thickness of the coating of the inorganic material was found to be 0.18 mm and the height of the rib was found to be 0.2 mm. The overall thickness of the resulting separator was slightly reduced as compared with those observed for the separators prepared in Examples 1 and 2 since the separator material penetrated into the inorganic sheet to a depth corresponding to about 10% of the thickness of the latter. However, these results are approximately identical to those obtained in Examples 1 and 2.

Example 4

The same procedures used in Example 1 were repeated except that a sheet of an inorganic material was prepared by blending 60% by weight of acid-resistant glass fibers having an average fiber diameter of 0.5 micrometers and 40% by weight of polyethylene synthetic pulp and then forming the resulting blend into a sheet having a thickness of 0.2 mm and wound in a roll according to the usual wet paper-making method, to thus give a separator. The overall thickness of the separator was found to be 0.65 mm, in which the thickness of the coating of the inorganic material was found to be 0.2 mm and the height of the rib was found to be 0.2 mm.

Comparative Example 1

The same procedures used in Example 1 were repeated except that a sheet of an inorganic material was prepared by blending 95% by weight of acid-resistant glass fibers having an average fiber diameter of 0.5 micrometers and 5% by weight of polyethylene synthetic pulp and then forming the resulting blend into a sheet having a thickness of 0.2 mm and wound in a roll according to the usual wet paper-making method, to thus give an inorganic material-coated polyethylene separator. The overall thickness thereof was found to be 0.65 mm, in which the thickness of the coating of the inorganic material was found to be 0.2 mm and the height of the rib was found to be 0.2 mm

Comparative Example 2

The same procedures used in Example 1 were repeated except that a sheet of an inorganic material was prepared by blending 80% by weight of acid-resistant glass fibers having an average fiber diameter of 10 micrometers and 20% by weight of polyethylene synthetic pulp and then forming the resulting blend into a sheet having a thickness of 0.2 mm and wound in a roll according to the usual wet paper-making method, to thus give a separator. The overall thickness of the separator was found to be 0.48 mm, in which the thickness of the coating of the inorganic material was found to be 0.03 mm and the height of the rib was found to be 0.2 mm. As a result, any separator having an overall thickness of 0.65 mm could not be prepared under the same conditions used in Example 1 since the separator material penetrated into the inorganic sheet to a depth corresponding to about 85% of the thickness of the latter.

Comparative Example 3

The same procedures used in Example 1 were repeated except that a sheet of an inorganic material was prepared by blending 50% by weight of acid-resistant glass fibers having an average fiber diameter of 0.5 micrometers and 50% by weight of polyethylene synthetic pulp and then forming the resulting blend into a sheet having a thickness of 0.2 mm and wound in a roll according to the usual wet paper-making method, to thus give a separator. The overall thickness of the resulting separator was found to be 0.65 mm, in which the thickness of the coating of the inorganic material was found to be 0.2 mm and the height of the rib was found to be 0.2 mm.

Comparative Example 4

The same procedures used in Example 1 were repeated except that a sheet of an inorganic material was prepared by blending 80% by weight of acid-resistant glass fibers having an average fiber diameter of 10 micrometers and 20% by weight of polyethylene synthetic pulp and then forming the resulting blend into a sheet having a thickness of 0.2 mm and wound in a roll according to the usual wet paper-making method and that a semi-molten resin sheet having a thickness of about 0.5 mm was extruded through the T-shaped die 1b for the purpose of forming a separator having an overall thickness of 0.65 mm, to thus give a separator. The overall thickness of the resulting separator was found to be 0.65 mm, in which the thickness of the coating of the inorganic material was found to be 0.03 mm and the height of the rib was found to be 0.2 mm. It was also found that the separator material penetrated into the inorganic sheet to a depth corresponding to about 85% of the thickness of the latter.

Comparative Example 5

The same procedures used in Example 1 were repeated except that a sheet of an inorganic material was prepared by blending 80% by weight of acid-resistant glass fibers having an average fiber diameter of 7 micrometers and 20% by weight of polyethylene synthetic pulp and then forming the resulting blend into a sheet having a thickness of 0.2 mm and wound in a roll according to the usual wet paper-making method, to thus give a separator. The overall thickness of the separator was found to be 0.59 mm, in which the thickness of the coating of the inorganic material was found to be 0.14 mm and the height of the rib was found to be 0.2 mm. As a result, any separator having an overall thickness of 0.65 mm could not be prepared under the same conditions used in Example 1 since the separator material penetrated into the inorganic sheet to a depth corresponding to about 30% of the thickness of the latter.

The separators prepared in the foregoing Examples and Comparative Examples were inspected for the oxidation-resistant service lives, the abilities to be formed into bags by the ultrasonic sealing technique and the electric resistance values. The results thus obtained are summarized in the following Table 1.

Table 1

| Ex. No. | Thickness of Separator(mm) | | | Oxidation-Resistant Service Life (Hr/Sheet) | Ability to Be Formed into Bag by Ultrasonic Sealing | Electric Resistance Value ( $\Omega \cdot 100 cm^2$/sheet) |
|---|---|---|---|---|---|---|
| | Overall Thickness | Thickness of Inorganic Coating | Height of Rib | | | |
| 1 | 0.65 | 0.20 | 0.20 | 800 | ○ | 0.0012 |
| 2 | 0.65 | 0.20 | 0.20 | 740 | ○ | 0.0012 |
| 3 | 0.63 | 0.18 | 0.20 | 700 | ○ | 0.0012 |
| 4 | 0.65 | 0.20 | 0.20 | 800 | ○ | 0.0014 |
| 1* | 0.65 | 0.20 | 0.20 | 790 | × (not fusing) | 0.0012 |
| 2* | 0.48 | 0.03 | 0.20 | 270 | ○ | 0.0013 |
| 3* | 0.65 | 0.20 | 0.20 | 810 | ○ | 0.0019 |
| 4* | 0.65 | 0.03 | 0.20 | 750 | ○ | 0.0020 |
| 5* | 0.59 | 0.14 | 0.20 | 550 | ○ | 0.0012 |

\* : Comparative Example

As has been discussed above in detail, the method according to the present invention permits the preparation of a separator for storage batteries which is excellent in the ability to be formed into a bag when assembling a storage battery, i. e., the resulting bag is free of any peeling off at the fused portions. Moreover, the surface of the separator is covered with an inorganic material and therefore, the resulting separator is not deteriorated through oxidation and this in turn results in the formation of a storage battery having long service life.

While the present invention has been described in connection with certain preferred embodiments, it is to be understood that the subject matter encompassed by way of the invention is not to be limited to those specific embodiments. On the contrary, it is intended for the subject matter of the invention to include all alternatives, modifications and equivalents as can be included within the spirit and scope of the following claims.

**Claims**

1. A method for preparing an inorganic material-coated separator (7') for storage batteries comprising the steps of extruding a sheet of a thermoplastic synthetic resin (6) using an extruder (1); adhering, to one side of said thermoplastic sheet (6), an inorganic sheet (4) mainly inluding an inorganic material to which a polyolefinic synthetic pulp, as an organic binder, is added in an amount ranging from 10 to 40% by weight on the basis of the total weight of said inorganic sheet (4) while said thermoplastic sheet (6) is still in the semi-molten state, to give a laminate (7); then pressure-molding said laminate to unify the semi-molten sheet (6) with said inorganic sheet (4); and then cooling the unified laminate.

2. The method according to claim 1, wherein said polyolefinic synthetic pulp is added in an amount ranging from 20 to 40% by weight.

3. The method according to claim 1 or 2, wherein said polyolefinic synthetic pulp is polyethylene synthetic pulp.

4. The method according to any of claims 1 to 3, wherein said sheet (4) mainly including an inorganic material is a sheet mainly including acid-resistant glass fibers having an average fiber diameter of not more than 5 micrometers.

5. The method according to any of claims 1 to 4, wherein said sheet (6) of a thermoplastic synthetic resin comprises a polyolefinic resin as a principal component, inorganic powder and a pore-forming agent.

6. The method according to claim 5, wherein it further comprises a step for removing said pore-forming agent.

7. The method according to claim 5 or 6, wherein said polyolefinic resin is an acid-resistant and oxidation-resistant polyolefinic resin having a weight-average molecular weight of not less than $1 \times 10^5$.

# FIG.1

EP 0 692 830 A1

<table>
<tr><td rowspan="2"><strong>ø))) European Patent Office</strong></td><td rowspan="2"><strong>EUROPEAN SEARCH REPORT</strong></td><td>Application Number</td></tr>
<tr><td>EP 95 11 1008</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X | WO-A-94 20995 (GRACE W R & CO) 15 September 1994<br>* claims 1-28 *<br>--- | 1 | H01M2/16 |
| X | EP-A-0 121 771 (GRACE GMBH) 17 October 1984<br>* claims 1-18 *<br>--- | 1 | |
| A | EP-A-0 413 297 (HITACHI MAXELL) 20 February 1991<br>* claims 1-8 *<br>--- | 1-7 | |
| A | EP-A-0 503 969 (GREATBATCH W LTD) 16 September 1992<br>* claims 1-15 *<br>----- | 1-7 | |
| | | | TECHNICAL FIELDS SEARCHED (Int.Cl.6) |
| | | | H01M |

The present search report has been drawn up for all claims

| Place of search | Date of completion of the search | Examiner |
|---|---|---|
| THE HAGUE | 17 October 1995 | Battistig, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9